# EUROPÄISCHE PATENTANMELDUNG

(11) **EP 3 670 568 A1**
(43) Veröffentlichungstag der Anmeldung: **24.06.2020**
(21) Anmeldenummer: 18215186.0
(22) Anmeldetag: 21.12.2018
(51) Int. Cl.: C08G 63/08, C08G 63/82, C08G 63/87

(54) **VERFAHREN ZUR HERSTELLUNG EINES POLYESTERS**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Gegenstand der Erfindung ist ein Verfahren zur Herstellung eines Polyesters durch Umsetzung einer H-funktionellen Startersubstanz mit einem Lacton in Gegenwart eines Katalysators, wobei die H-funktionelle Verbindung eine oder mehrere freie Carboxygruppe(n) aufweist und wobei der Katalysator eine Brönsted-Säure oder ein Doppelmetallcyanid (DMC)-Katalysator ist. Ein weiterer Gegenstand ist auch der Polyester erhältlich nach der vorliegenden Erfindung.

## Beschreibung

Gegenstand der Erfindung ist ein Verfahren zur Herstellung eines Polyesters durch Umsetzung einer H-funktionellen Startersubstanz mit einem Lacton in Gegenwart eines Katalysators, wobei die H-funktionelle Verbindung eine oder mehrere freie Carboxygruppe(n) aufweist und wobei der Katalysator eine Brönsted-Säure oder ein Doppelmetallcyanid (DMC)-Katalysator ist. Ein weiterer Gegenstand ist auch der Polyester erhältlich nach der vorliegenden Erfindung.

WO 2011/000560 A1 offenbart ein Verfahren zur Herstellung von Polyetheresterpolyolen mit primären Hydroxyl-Endgruppen, umfassend die Schritte der Reaktion einer aktive Wasserstoffatome aufweisenden Startersubstanz mit einem Epoxid unter Doppelmetallcyanid-Katalyse, der Reaktion des erhaltenen Produktes mit einem zyklischen Carbonsäureanhydrid sowie der Reaktion dieses erhaltenen Produktes mit Ethylenoxid in Gegenwart eines Katalysators, welcher pro Molekül mindestens ein Stickstoffatom umfasst, wobei nicht-zyklische, identisch substituierte tertiäre Amine ausgenommen sind. Die resultierenden Polyetheresterpolyole dieses mehrstufigen Verfahrens weisen einen primären Hydroxylgruppenanteil von maximal 76 % auf.

In WO2008/104723 A1 wird ein Verfahren zur Herstellung eines Polylactons oder Polylactams offenbart, bei dem das Lacton oder Lactam mit einer H-funktionellen Startersubstanz in Gegenwart eines nicht-chlorierten, aromatischen Lösungsmittels und einer Sulfonsäure im Mikroliter-Maßstab umgesetzt wird. Hierbei werden als H-funktionelle Startersubstanz niedermolekulare monofunktionelle oder polyfunktionelle Alkohole oder Thiole verwendet, wobei in den Ausführungsbeispielen (monofunktionelles) n-Pentanol, mit ε-Caprolacton oder δ-Valerolacton in Gegenwart von hohen Mengen an Trifluormethansulfonsäure von 2.5 mol-% oder mehr offenbart ist.

In Couffin et al. Poly. Chem 2014, 5, 161 wird eine selektive O-Acyl Öffnung von β-Butyrolacton an H-funktionelle Startersubstanzen wie beispielsweise n-Pentanol, 1,4-Butandiol und Polyethylenglycol in deuteriertem Benzol und in Gegenwart von Trifluormethansulfonsäure im batch-Modus offenbart. Hierbei werden die Umsetzungen im Mikroliter-Maßstab durchgeführt und dabei hohe Mengen des Säurekatalysators von 2.5 mol-% oder mehr bezogen auf die Menge an eingesetztem Lacton verwendet.

In GB1201909 wird ebenfalls ein Verfahren zur Herstellung von Polyester durch Umsetzung eines Lactons mit einer H-funktionellen Startersubstanz in Gegenwart einer organischen Carbon- oder Sulfonsäure, deren PKs-Wert bei 25 °C kleiner als 2.0 ist. Hierbei wurden alle Reaktionskomponenten wie kurzkettige Alkohole sowie ε-Caprolacton oder Mischungen aus isomeren Methyl- ε-Caprolacton in hohen Mengen an Trichlor- oder Trifluoressigsäurekatalysator vorgelegt und im batch-Verfahren für mindestens 20 h umgesetzt, wobei Feststoffe oder flüssige Produkt mit einer breiten Molmassenverteilung resultierten.

In US5032671 wird ein Verfahren zur Herstellung von polymeren Lactonen durch Umsetzung einer H-funktionellen Startersubstanz und Lactonen in Gegenwart eines Doppelmetallcyanid-(DMC)-Katalysators offenbart. In den Ausführungsbeispielen werden hierbei die Umsetzung von Polyetherpolyolen mit ε-Caprolacton, δ-Valerolacton oder β-Propiolacton zu Polyether-Polyesterpolyol Blockcopolymeren offenbart, wobei diese Reaktionen in Gegenwart hoher Mengen von 980 ppm bis 1000 ppm des Cobalt-haltigen DMC-Katalysators und in Gegenwart von organischen Lösungsmitteln durchgeführt wird, wobei die resultierenden Produkte eine breite Molmassenverteilung von 1.32 bis 1.72 aufweisen. Für die Umsetzung des Polyetherpolyols mit β-Propiolacton wird lediglich die Bildung eines resultierenden Polyesters mit einer Molmasse von 10000 g/mol postuliert. Zudem ist in diesem Verfahren ein Aufarbeitungsschritt notwendig, bei dem die Produkte über Diatomeenerde filtriert und anschließend das Lösungsmittel entfernt wird.

Ausgehend vom Stand der Technik war es Aufgabe der vorliegenden Erfindung das Herstellungsverfahren von Polyestern hinsichtlich der Bildung eines definierten, homogenen Reaktionsproduktes unter Einbau aller Reaktionskomponenten zu verbessern und zu vereinfachen, wobei die resultierenden Polyester auch eine enge Molmassenverteilung mit einem Polydisperistätsindex von bevorzugt kleiner oder gleich 1.15 aufweist.

Überraschend wurde gefunden, dass die erfindungsgemäße Aufgabe gelöst wird durch ein Verfahren zur Herstellung eines Polyesters durch Umsetzung einer H-funktionellen Startersubstanz mit einem Lacton in Gegenwart eines Katalysators, wobei die H-funktionelle Verbindung eine oder mehrere freie Carboxygruppe(n) aufweist und wobei der Katalysator eine Brönsted-Säure oder ein Doppelmetallcyanid (DMC)-Katalysator ist..

Im erfindungsgemäßen Verfahren wird eine H-funktionelle Verbindung verwendet, wobei die H-funktionelle Verbindung eine oder mehrere Carboxygruppe(n), bevorzugt 1 bis 8 und besonders bevorzugt 2 bis 6 aufweist.

In einer Ausführungsform des erfindungsgemäßen Verfahrens weist die H-funktionelle Verbindung keine freien primären und/oder sekundären Hydroxylgruppen auf.

In einer Ausführungsform des erfindungsgemäßen Verfahrens ist die H-funktionelle Startersubstanz mit einer oder mehreren freien Carboxygruppe(n) eine oder mehrere Verbindung(en) ist und ausgewählt wird aus der Gruppe bestehend aus einwertige Carbonsäuren, mehrwertige Carbonsäuren, Carboxygruppe(n) terminierte Polyester, Carboxygruppe(n) terminierte Polycarbonate, Carboxygruppe(n) terminierte Polyethercarbonate, Carboxygruppe(n) terminierte Polyetherestercarbonatpolyole und Carboxygruppe(n) terminierte Polyether.

Als einwertige Carbonsäuren eignen sich einwertige C1 bis C20-Carbonsäuren wie beispielsweise Methansäure, Ethansäure, Propansäure, Butansäure, Pentansäure, Hexansäure, Heptansäure, Octansäure, Decansäure, Dodecansäure, Tetradecansäure, Hexadecansäure, Octadecansäure, Milchsäure, Fluoressigsäure, Chloressigsäure, Bromessigsäure, Iodessigsäure, Difluoressigsäure, Trifluoressigsäure, Dichloressigsäure, Trichloressigsäure, Ölsäure, Salicylsäure, Benzoesäure Acrylsäure und Methacrylsäure.

Als mehrwertige Carbonsäuren eignen sich mehrwertige C1 bis C20-Carbonsäuren wie beispielsweise Oxalsäure, Malonsäure, Bernsteinsäure , Glutarsäure, Adipinsäure, Pimelinsäure, Korksäure, Azelainsäure, Sebacinsäure, Zitronensäure, Trimesinsäure, Fumarsäure, Maleinsäure, 1,10-Decandicarbonsäure, 1,12-Dodecandicarbonsäure, Phthalsäure, Isophthalsäure, Terephthalsäure, Pyromellitsäure und Trimellitsäure.

Die H-funktionellen Startersubstanzen können auch aus der Substanzklasse der Carboxygruppe(n) terminerten Polyester ausgewählt sein, insbesondere solchen mit einem Molekulargewicht Mn im Bereich von 50 bis 4500 g/mol. Als Polyester können mindestens difunktionelle Polyester eingesetzt werden. Bevorzugt bestehen Polyester aus alternierenden Säure- und Alkoholeinheiten. Als Säurekomponenten können z.B. Bernsteinsäure, Maleinsäure, Adipinsäure, Phthalsäure, Isophthalsäure, Terephthalsäure, Tetrahydrophthalsäure eingesetzt werden. Die resultierenden Polyester weisen hierbei terminale Carboxygruppen auf.

Bevorzugt werden Carboxygruppe(n) terminerte Polycarbonate beispielsweise durch Umsetzung von Polycarbonatpolyolen, bevorzugt Polycarbonatdiolen mit stöchiometrischer Zugabe oder stöchiometrischen Überschuss, bevorzugt stöchiometrischen Überschuss an mehrwertigen Carbonsäuren und/oder cyclischen Anhydriden erhalten.

Die Polycarbonatdiole weisen insbesondere ein Molekulargewicht Mn im Bereich von 1000 bis 4500 g/mol, vorzugsweise 1500 bis 2500 g/mol auf wobei die Polycarbonatdiole beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z.B. in der EP-A 1359177. Beispielsweise können als Polycarbonatdiole die Desmophen® C-Typen der CovestroAG verwendet werden, wie z.B. Desmophen® C 1100 oder Desmophen® C 2200. Cyclische Anhydride sind beispielsweise Maleinsäureanhdrid, Bernsteinsäureanhydrid, Methyl-Bersteinsäureanhydrid, Phthalsäureanhydrid, Tetrahydrophthalsäureanhydrid und Hexahydro-phthalsäureanhydrid.

Bevorzugt werden Carboxygruppe(n) terminerte Polyethercarbonate und/oder Polyetherestercarbonate beispielsweise durch Umsetzung von Polyethercarbonatpolyolen und/oder Polyetherestercarbonatpolyolen mit stöchiometrischer Zugabe oder stöchiometrischen Überschuss, bevorzugt stöchiometrischen Überschuss an mehrwertigen Carbonsäuren und/oder cyclischen Anhydriden erhalten. Die Polyethercarbonatpolyole (z.B. cardyon® Polyole der Fa. Covestro), Polycarbonatpolyole (z.B. Converge® Polyole der Fa. Novomer / Saudi Aramco, NEOSPOL Polyole der Fa. Repsol etc.) und/oder Polyetherestercarbonatpolyole eingesetzt werden. Insbesondere können Polyethercarbonatpolyole, Polycarbonatpoylole und/oder Polyetherestercarbonatpolyole durch Umsetzung von Alkylenoxiden, bevorzugt Ethylenoxid, Propylenoxid oder deren Mischungen, optional weiteren Co-Monomeren mit CO2 in Gegenwart einer weiteren H-funktionellen Startersubstanz und unter Verwendung von Katalysatoren erhalten werden. Diese Katalysatoren umfassen Doppelmetallcyanid-Katalysatoren (DMC-Katalysatoren) und/oder Metallkomplexkatalysatoren beispielsweise auf Basis der Metalle Zink und/oder Cobalt, wie beispielsweise Zink-Glutarat-Katalysatoren (beschrieben z.B. in M. H. Chisholm et al., Macromolecules 2002, 35, 6494), sogenannte Zink-Diiminat-Katalysatoren (beschrieben z.B. in S. D. Allen, J. Am. Chem. Soc. 2002, 124, 14284) und sogenannte Cobalt-Salen-Katalysatoren (beschrieben z.B. in US 7,304,172 B2, US 2012/0165549 A1) und/oder Mangan-Salen Komplexe. Eine Übersicht über die bekannten Katalysatoren für die Copolymerisation von Alkylenoxiden und CO2 gibt zum Beispiel Chemical Communications 47(2011)141-163. Durch die Verwendung unterschiedlicher Katalysatorsysteme, Reaktionsbedingungen und/oder Reaktionssequenzen erfolgt hierbei die Bildung von statistischen, alternierenden, blockartigen oder gradientenartigen Polyethercarbonatpolyole, Polycarbonatpoylole und/oder Polyetherestercarbonatpolyole. Diese als H-funktionelle Startersubstanzen eingesetzten Polyethercarbonatpolyole, Polycarbonatpoylole und/oder Polyetherestercarbonatpolyole können hierzu in einem separaten Reaktionsschritt zuvor hergestellt werden. Cyclische Anhydride sind beispielsweise Maleinsäureanhydrid, Bernsteinsäureanhydrid, Methyl-Bersteinsäureanhydrid, Phthalsäureanhydrid, Tetrahydrophthalsäureanhydrid und Hexahydrophthalsäureanhydrid.

Bevorzugt werden Carboxygruppe(n) terminierte Polyether beispielsweise durch Umsetzung von Polyetherpolyolen mit stöchiometrischer Zugabe oder stöchiometrischen Überschuss, bevorzugt stöchiometrischen Überschuss an mehrwertigen Carbonsäuren und/oder cyclischen Anhydriden erhalten. Die Polyetherpolyole, die aus sich wiederholenden Ethylenoxid- und Propylenoxideinheiten aufgebaut sind, bevorzugt mit einem Anteil von 50 bis 100% Propylenoxideinheiten, besonders bevorzugt mit einem Anteil von 80 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®-Baygal®-, PET®- und Polyether-Polyole der Covestro AG (wie z. B. Desmophen® 3600Z, Desmophen® 1900U, Acclaim® Polyol 2200, Acclaim® Polyol 4000I, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE. Cyclische Anhydride sind beispielsweise Maleinsäureanhdrid, Bernsteinsäureanhydrid, Methyl-Bersteinsäureanhydrid, Phthalsäureanhydrid, Tetrahydrophthalsäureanhydrid und Hexahydro-phthalsäureanhydrid.

In einer Ausführungsform des erfindungsgemäßen Verfahrens ist die H-funktionelle Startersubstanz mit einer oder mehreren freien Carboxygruppe(n) eine oder mehrere Verbindung(en) und wird ausgewählt aus der Gruppe bestehend aus Methansäure, Ethansäure, Propansäure, Butansäure, Pentansäure, Hexansäure, Heptansäure, Octansäure, Decansäure, Dodecansäure, Tetradecansäure, Hexadecansäure, Octadecansäure, Milchsäure, Fluoressigsäure, Chloressigsäure, Bromessigsäure, Iodessigsäure, Difluoressigsäure, Trifluoressigsäure, Dichloressigsäure, Trichloressigsäure, Ölsäure, Salicylsäure, Benzoesäure, Oxalsäure, Malonsäure, Bernsteinsäure , Glutarsäure, Adipinsäure, Pimelinsäure, Korksäure, Azelainsäure, Sebacinsäure, Zitronensäure, Trimesinsäure, Fumarsäure, Maleinsäure, 1,10-Decandicarbonsäure, 1,12-Dodecandicarbonsäure, Phthalsäure, Isophthalsäure, Terephthalsäure, Pyromellitsäure und Trimellitsäure, Acrylsäure und Methacrylsäure.

Unter Lactonen sind gemäß dem technisch-allgemeingültigen Verständnis in der organischen Chemie heterocyclische Verbindungen zu verstehen wobei Lactone durch intramolekulare Veresterung, d.h. der Umsetzung eines Hydroxyfunktionalität mit einer Carboxyfunktionalität einer Hydroxycarbonsäure, gebildet werden. Es handelt sich somit um cyclische Ester mit einem Ringsauerstoff.

In einer Ausführungsform des erfindungsgemäßen Verfahrens ist das Lacon ein 4-gliedriges Ringlacton, 5-gliedriges Ringlacton, 6-gliedrigen Ringlacton, 7-gliedriges Ringlacton und/oder höhergliedriges Ringlacton bevorzugt ein 4-gliedriges Ringlacton.

In einer Ausführungsform des erfindungsgemäßen Verfahrens ist das Lacton ein 4-gliedriges Ringlacton, wobei das 4-gliedrige Ringlacton eine oder mehrere Verbindung(en) ist und ausgewählt wird aus der Gruppe bestehend aus Propiolacton, β-Butyrolacton, Diketen bevorzugt Propiolacton und β-Butyrolacton.

In einer Ausführungsform des erfindungsgemäßen Verfahrens ist der Katalysator ein Doppelmetallcyanid (DMC) - Katalysator.

Die in dem erfindungsgemäßen Verfahren vorzugsweise einsetzbaren DMC-Katalysatoren enthalten Doppelmetallcyanid-Verbindungen, die die Reaktionsprodukte wasserlöslicher Metallsalze und wasserlöslicher Metallcyanidsalze sind.

Doppelmetallcyanid (DMC)-Katalysatoren zur Verwendung in der Homopolymerisation von Alkylenoxiden sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität und ermöglichen die Herstellung von Polyoxyalkylenpolyolen bei sehr geringen Katalysatorkonzentrationen. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert-Butanol) noch einen Polyether mit einem zahlenmittlerem Molekulargewicht größer als 500 g/mol enthalten.

Die erfindungsgemäß einsetzbaren DMC-Katalysatoren werden vorzugsweise erhalten, indem man
(1.) im ersten Schritt eine wässrige Lösung eines Metallsalzes mit der wässrigen Lösung eines Metallcyanidsalzes in Gegenwart eines oder mehrerer organischen Komplexliganden, z.B. eines Ethers oder Alkohols, umsetzt,
(2.) wobei im zweiten Schritt der Feststoff aus der aus (1.) erhaltenen Suspension durch bekannte Techniken (wie Zentrifugation oder Filtration) abgetrennt wird,
(3.) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),
(4.) wobei anschließend der erhaltene Feststoff, gegebenenfalls nach Pulverisierung, bei Temperaturen von im allgemeinen 20 - 120°C und bei Drücken von im Allgemeinen 0,1 mbar bis Normaldruck (1013 mbar) getrocknet wird,
und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Die in den erfindungsgemäß einsetzbaren DMC-Katalysatoren enthaltenen Doppelmetallcyanid-Verbindungen sind die Reaktionsprodukte wasserlöslicher Metallsalze und wasserlöslicher Metallcyanidsalze.

Beispielsweise wird eine wässrige Zinkchlorid-Lösung (bevorzugt im Überschuss bezogen auf das Metallcyanidsalz) und Kaliumhexacyanocobaltat gemischt und anschließend Dimethoxyethan (Glyme) oder tert-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze weisen bevorzugt eine Zusammensetzung nach der allgemeinen Formel (I) auf,

M(X)n (I),

wobei
M ausgewählt ist aus den Metallkationen Zn²⁺, Fe²⁺, Ni²⁺, Mn²⁺, Co²⁺, Sr²⁺, Sn²⁺, Pb²⁺ und, Cu²⁺, bevorzugt ist M Zn²⁺, Fe²⁺, Co²⁺ oder Ni²⁺,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat und
n ist 2, wenn X = Halogenid, Hydroxid, Carboxylat, Cyanat, Thiocyanat, Isocyanat, Isothiocyanat oder Nitrat,
oder geeignete Metallsalze weisen bevorzugt eine Zusammensetzung nach der allgemeinen Formel (II) auf,

Mr(X)3 (II),

wobei
M ausgewählt ist aus den Metallkationen Fe³⁺, Al³⁺, Co³⁺ und Cr³⁺,
X umfasst ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanate Isocyanat, Isothiocyanat, Carboxylat, Oxalat und Nitrat;
r ist 2, wenn X = Sulfat, Carbonat oder Oxalat und
r ist 1, wenn X = Halogenid, Hydroxid, Carboxylat, Cyanat, Thiocyanat, Isocyanat, Isothiocyanat oder Nitrat,
oder geeignete Metallsalze weisen bevorzugt eine Zusammensetzung nach der allgemeinen Formel (III) auf,

M(X)s (III),

wobei
M ausgewählt ist aus den Metallkationen Mo⁴⁺, V⁴⁺ und W⁴⁺,
X umfasst ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat,
Cyanat, Thiocyanat, Isocyanat, Isothiocyanat, Carboxylat, Oxalat und Nitrat;
s ist 2, wenn X = Sulfat, Carbonat oder Oxalat und
s ist 4, wenn X = Halogenid, Hydroxid, Carboxylat, Cyanat, Thiocyanat, Isocyanat, Isothiocyanat oder Nitrat,
oder geeignete Metallsalze weisen bevorzugt eine Zusammensetzung nach der allgemeinen Formel (IV) auf,

M(X)t (IV),

wobei
M ausgewählt ist aus den Metallkationen Mo⁶⁺ und W⁶⁺,
X umfasst ein oder mehrere (d.h. verschiedene) Anionen, vorzugsweise Anionen ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat und
t ist 6, wenn X = Halogenid, Hydroxid, Carboxylat, Cyanat, Thiocyanat, Isocyanat, Isothiocyanat oder Nitrat.
Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.
Zur Herstellung der Doppelmetallcyanid-Verbindungen geeignete Metallcyanidsalze weisen bevorzugt eine Zusammensetzung nach der allgemeinen Formel (V) auf

(Y)a M'(CN)b (A)c (V),

wobei
M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),
Y ausgewählt ist aus einem oder mehreren Metallkationen der Gruppe bestehend aus Alkalimetall (d.h. Li⁺, Na⁺, K⁺, Rb⁺) und Erdalkalimetall (d.h. Be²⁺, Mg²⁺, Ca²⁺, Sr²⁺, Ba²⁺),
A ausgewählt ist aus einem oder mehreren Anionen der Gruppe bestehend aus Halogenide (d.h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und
a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calciumhexacyano-cobaltat(III) und Lithiumhexacyanocobaltat(III).

Bevorzugte Doppelmetallcyanid-Verbindungen, die in den erfindungsgemäß einsetzbaren DMC-Katalysatoren enthalten sind, sind Verbindungen mit Zusammensetzungen nach der allgemeinen Formel (VI)

Mx[M'x,(CN)y]z (VI),

worin M wie in den Formeln (I) bis (IV) und
M' wie in Formel (V) definiert ist, und
x, x', y und z ganzzahlig sind und so gewählt, dass die Elektronenneutralität der Doppelmetallcyanidverbindung gegeben ist.

Vorzugsweise ist
x = 3, x'= 1, y = 6 und z = 2,
M = Zn(II), Fe(II), Co(II) oder Ni(II) und
M' = Co(III), Fe(III), Cr(III) oder Ir(III).

Beispiele geeigneter Doppelmetallcyanid-Verbindungen (VI) sind Zinkhexacyanocobaltat(III), Zinkhexacyanoiridat(III), Zinkhexacyanoferrat(III) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt kann Zinkhexacyanocobaltat(III) verwendet werden. Die bei der Herstellung der DMC-Katalysatoren zusetzbaren organischen Komplexliganden sind beispielsweise in US-A 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert-butylether, Diethylenglykol-mono-tert-butylether, Tripropylenglykolmono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol, 2-Methyl-3-buten-2-ol, 2-Methyl-3-butin-2-ol, Ethylenglykol-mono-tert-butylether und 3-Methyl-3-oxetan-methanol.

Optional werden in der Herstellung der erfindungsgemäß einsetzbaren DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-coacrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, α,β-ungesättigten Carbonsäureester oder ionische oberflächen- bzw. grenzflächenaktiven Verbindungen eingesetzt.

Bevorzugt werden bei der Herstellung der erfindungsgemäß einsetzbaren DMC-Katalysatoren die wässrigen Lösungen des Metallsalzes (z.B. Zinkchlorid) im ersten Schritt im stöchiometrischen Überschuss (mindestens 50 Mol-%) bezogen auf das Metallcyanidsalz eingesetzt. Dies entspricht mindestens einem molaren Verhältnis von Metallsalz zu Metallcyanidsalz von 2,25 zu 1,00. Das Metallcyanidsalz (z.B. Kaliumhexacyanocobaltat) wird in Gegenwart des organischen Komplexliganden (z.B. tert-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators, wie beispielsweise in WO-A 01/39883 beschrieben.

Im zweiten Schritt kann die Isolierung des Feststoffs (d.h. die Vorstufe des Katalysators) aus der Suspension durch bekannte Techniken, wie Zentrifugation oder Filtration, erfolgen.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäß einsetzbaren Katalysator entfernt werden. Bevorzugt liegt die Menge des organischen Komplexliganden in der wässrigen Waschlösung zwischen 40 und 80 Gew.%, bezogen auf die Gesamtlösung.

Optional wird im dritten Schritt der wässrigen Waschlösung eine weitere komplexbildende Komponente, bevorzugt im Bereich zwischen 0,5 und 5 Gew.%, bezogen auf die Gesamtlösung, zugefügt.

Außerdem ist es vorteilhaft, den isolierten Feststoff mehr als einmal zu waschen. Vorzugsweise wird in einem ersten Waschschritt mit einer wässrigen Lösung des organischen Komplexliganden gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem erfindungsgemäß einsetzbaren Katalysator zu entfernen. Besonders bevorzugt liegt die Menge des organischen Komplexliganden in der wässrigen Waschlösung zwischen 40 und 80 Gew.%, bezogen auf die Gesamtlösung des ersten Waschschritts. In den weiteren Waschschritten wird entweder der erste Waschschritt einmal oder mehrmals, vorzugsweise einmal bis dreimal wiederholt, oder vorzugsweise wird eine nicht-wässrige Lösung, wie z.B. eine Mischung oder Lösung aus organischen Komplexliganden und weiterer komplexbildender Komponente (bevorzugt im Bereich zwischen 0,5 und 5 Gew.%, bezogen auf die Gesamtmenge der Waschlösung des Schrittes, als Waschlösung eingesetzt und der Feststoff damit einmal oder mehrmals, vorzugsweise einmal bis dreimal gewaschen.

Der isolierte und gegebenenfalls gewaschene Feststoff kann anschließend, gegebenenfalls nach Pulverisierung, bei Temperaturen von 20 - 100°C und bei Drücken von 0,1 mbar bis Normaldruck (1013 mbar) getrocknet werden.

Ein bevorzugtes Verfahren zur Isolierung der erfindungsgemäß einsetzbaren DMC-Katalysatoren aus der Suspension durch Filtration, Filterkuchenwäsche und Trocknung wird in WO-A 01/80994 beschrieben.

In einer Ausführungsform des erfindungsgemäßen Verfahrens umfasst der Doppelmetallcyanid Katalysator einen organischen Komplexliganden, wobei der organische Komplexligand eine oder mehrere Verbindung(en) ist und ausgewählt wird aus der Gruppe bestehend aus tert-Butanol 2-Methyl-3-buten-2-ol, 2-Methyl-3-butin-2-ol, Ethylenglykol-mono-tert-butylether und 3-Methyl-3-oxetan-methanol.

In einer Ausführungsform des erfindungsgemäßen Verfahrens wird der Doppelmetallcyanid (DMC) - Katalysator in einer Menge von 20 ppm bis 5000 ppm, bevorzugt 50 ppm bis 4000 ppm bezogen auf sich gebildetes Polyester eingesetzt.

In einer weiteren Ausführungsform des erfindungsgemäßen Verfahrens ist der Katalysator eine Brönsted-Säure.

Gemäß der gängigen, fachlichen Definition sind unter Brönsted-Säuren Stoffe zu verstehen, welche Protonen an einen zweiten Reaktionspartner, die sogenannte Brönsted-Base typischerweise im wässrigen Medium bei 25 °C übertragen können. Im Sinne der vorliegenden Erfindung bezeichnet der Begriff des Brönsted-sauren Katalysators eine nicht-polymere Verbindung, wobei der des Brönsted-sauren Katalysator eine berechnete Molmasse von ≤ 1200 g/mol, bevorzugt von ≤ 1000 g/mol und besonders bevorzugt von ≤ 850 g/mol aufweist.

In einer Ausführungsform des erfindungsgemäßen Verfahrens weist der Brönsted-saure Katalysator einen pKs Wert von kleiner gleich 1, bevorzugt von kleiner gleich 0 auf.

In einer Ausführungsform des erfindungsgemäßen Verfahrens ist der Brönsted-saure Katalysator eine oder mehrere Verbindung(en und ausgewählt wird aus der Gruppe bestehend aus aliphatischen fluorierten Sulfonsäuren, aromatischen fluorierten Sulfonsäuren, Trifluoromethansulfonsäure, Perchlorsäure, Chlorwasserstoffsäure, Bromwasserstoffsäure, Jodwasserstoffsäure, Fluorsulfonsäure, Bis(trifluoromethan)sulfonimid, Hexafluorantimonsäure, Pentacyanocyclo¬pentadien, Pikrinsäure, Schwefelsäure, Salpetersäure, Trifluoressigsäure, Methansulfonsäure, Paratoluolsulfonsäure, aromatische Sulfonsäuren und aliphatische Sulfonsäuren, bevorzugt aus Trifluoromethansulfonsäure, Perchlorsäure, Chlorwasserstoffsäure, Bromwasserstoffsäure, Jodwasserstoffsäure, Fluorsulfonsäure, Bis(trifluoromethan)sulfonimid, Hexafluorantimonsäure, Pentacyanocyclopentadien, Pikrinsäure, Schwefelsäure, Salpetersäure, Trifluoressigsäure, Methansulfonsäure, Methansulfonsäure und Para-Toluolsulfonsäure besonders bevorzugt aus Trifluoromethansulfonsäure, Perchlorsäure, Chlorwasserstoffsäure, Bromwasserstoffsäure, Jodwasserstoffsäure, Bis(trifluoromethan)-sulfonimid, Pentacyanocyclopentadien, Schwefelsäure, Salpetersäure und Trifluoressigsäure.

In einer Ausführungsform des erfindungsgemäßen Verfahrens wird der Brönsted-saure Katalysator in einer Menge von 0,001 mol-% bis 0,5 mol-% bevorzugt von 0,003 bis 0,4 mol-% und besonders bevorzugt von 0,005 bis 0,3 mol-% bezogen auf die Menge an Lacton eingesetzt.

Gemäß der gängigen fachlichen Definition ist unter einem Lösungsmittel eine oder mehrere Verbindungen zu verstehen, die das Lacton oder die H-funktionelle Startersubstanz und/oder den Brönsted-sauren Katalysator lösen ohne jedoch selbst mit dem Lacton, der H-funktionellen Startersubstanz und/oder den Brönsted-sauren Katalysator zu reagieren.

In einer Ausführungsform des erfindungsgemäßen Verfahrens wird die Herstellung der Polyester in Anwesenheit eines aprotischen Lösungsmittel durchgeführt wie beispielsweise Toluol, Benzol, Tetrahydrofuran, Dimethylether und Diethylether.

In einer bevorzugten Ausführungsform wird das erfindungsgemäße Verfahren ohne Zusatz eines Lösungsmittels durchgeführt, so dass dieses nach der Herstellung des Polyesters nicht in einem zusätzlichen Verfahrensschritt abgetrennt werden muss.

In einer Ausführungsform des erfindungsgemäßen Verfahrens wird die Umsetzung der H-funktionellen Startersubstanz mit dem Lacton in Gegenwart des Brönsted-sauren Katalysators bei Temperaturen von 20 bis 150°C, bevorzugt von 20 bis 100°C. Unterhalb von 20 °C findet keine oder nur unwesentliche Umsetzung zum erfindungsgemäßen Produkt statt und oberhalb von 150 °C erfolgt die Zersetzung des gebildeten Polyesters und/oder ungewollte Parallel- oder Folgereaktionen.

In einer Ausführungsform des erfindungsgemäßen Verfahrens wird die Umsetzung der H-funktionellen Startersubstanz mit dem Lacton in Gegenwart des Doppelmetallcyanid (DMC)-Katalysators bei Temperaturen von 70 bis 150°C, bevorzugt von 90 bis 130°C. Unterhalb von 70 °C findet keine oder nur unwesentliche Umsetzung zum erfindungsgemäßen Produkt statt und oberhalb von 150 °C erfolgt die Zersetzung des gebildeten Polyesters und/oder ungewollte Neben- oder Folgereaktionen.

In einer Ausführungsform umfasst das erfindungsgemäße Verfahren folgende Schritte:
i) Vorlegen der H-funktionellen Startersubstanz und optional des Katalysators unter Bildung einer Mischung i)
ii) Zugabe des Lactons zur Mischung i).

In einer Ausführungsform des erfindungsgemäßen Verfahrens wird das Lacton in Schritt ii) kontinuierlich oder stufenweise zu der H-funktionellen Startersubstanz zugegeben und zum Polyester umgesetzt (semi-batch Modus).

Im erfindungsgemäßen Verfahren ist unter einer kontinuierlichen Zugabe des Lactons ein Volumenstrom des Lactons von > 0 mL/min zu verstehen, wobei der Volumenstrom während dieses Schrittes konstant sein kann oder variiert (kontinuierliche Lactonzugabe).

In einer alternativen Ausführungsform des erfindungsgemäßen Verfahrens wird das Lacton in Schritt ii) stufenweise zur Mischung i) zugegeben und anschließend zum Polyester umgesetzt (stufenweise Lactonzugabe).

Im erfindungsgemäßen Verfahren ist unter einer stufenweisen Zugabe des Lactons mindestens die Zugabe der gesamten Lactonmenge in zwei oder mehr diskreten Portionen des Lactons zu verstehen, wobei der Volumenstrom des Lactons zwischen den zwei oder mehreren diskreten Portionen 0 mL/min beträgt und wobei der Volumenstrom des Lactons während einer diskreten Portion konstant sein kann oder variiert aber > 0 mL/min ist.

In einer alternativen Ausführungsform umfasst das erfindungsgemäße Verfahren folgende Schritte:
(a) Vorlegen der H-funktionellen Startersubstanz, des Lactons und optional des Katalysators unter Bildung einer Mischung (a)
(b) Umsetzung der Mischung (a) zum Polyester
was einer batch-weise Verfahrensführung entspricht.

In einer weiteren alternativen Ausführungsform umfasst das erfindungsgemäße Verfahren folgende Schritte:
i) Vorlegen des Katalysators
ii) Zugabe des Lactons und der H-funktionellen Startersubstanz zu dem Katalysator.

Hierbei können das Lacton und die H-funktionelle Startersubstanz vorvermischt werden oder das Lacton und die H-funktionelle Startersubstanz werden durch separate Zuführungen in den Reaktor gegeben. Dies entspricht einer CAOS (Continuous Addition of Starter) Fahrweise.

In einer weiteren, alternativen Ausführungsform wird die H-funktionelle Startersubstanz, das Lacton und der Katalysator kontinuierlich vermischt und miteinander zur Reaktion gebracht, während kontinuierlich das Polyester Produkt abgeführt wird, wobei die Reaktion beispielsweise in einem Rohrreaktor oder einem kontinuierlichen Rührkesselreaktor (engl. continous stirred tank reactor) oder Kombinationen dieser beiden Reaktionsapparate durchgeführt wird was einem vollkontinuierlichen Herstellungsverfahren für des Polyesters entspricht.

Ein weiterer Gegenstand der vorliegenden Erfindung sind Polyester erhältlich nach dem erfindungsgemäßen Verfahren.

In einer Ausführungsform weist der erfindungsgemäße Polyester einen Polydisperistätsindex von ≤1.15, bevorzugt ≤1.10 auf, wobei der Polydisperistätsindex mittels der in der Beschreibung offenbarten Gel-Permeations-Chromatographie bestimmt wurde.

In einer Ausführungsform weist der erfindungsgemäße Polyester ein zahlenmittleres Molekulargewicht von 70 g/mol bis 15.000 g/mol bevorzugt von 70 g/mol bis 10.000 g/mol und besonders bevorzugt von 80 g/mol bis 5.000 g/mol auf, wobei das zahlenmittlere Molekulargewicht mittels der im Experimentalteil offenbarten Gel-Permeations-Chromatographie (GPC) bestimmt wird

Eine weitere Ausführungsform der vorliegenden Erfindung betrifft Beschichtungszusammensetzungen oder Klebstoffzusammensetzungen enthaltend die erfindungsgemäßen Polyester.

In einer weiteren Ausführungsform der Erfindung wird der erfindungsgemäße Polyester in Beschichtungen oder Klebstoffen verwendet.

Eine weitere Ausführungsform der vorliegenden Erfindung umfasst ein Verfahren zur Umsetzung der erfindungsgemäßen Polyester mit Verbindungen umfassend Carboxy-Gruppen reaktive Verbindungen wie beispielsweise Alkylenoxide, Alkohole, Amine.

In einer ersten Ausführungsform betrifft die Erfindung ein Verfahren zur Herstellung eines Polyesters durch Umsetzung einer H-funktionellen Startersubstanz mit einem Lacton in Gegenwart eines Katalysators, wobei die H-funktionelle Verbindung eine oder mehrere freie Carboxygruppe(n) aufweist und wobei der Katalysator eine Brönsted-Säure oder ein Doppelmetallcyanid (DMC)-Katalysator ist.

In einer zweiten Ausführungsform betrifft die Erfindung ein Verfahren gemäß der ersten Ausführungsform, wobei das Lacton ein 4-gliedriges Ringlacton, 5-gliedriges Ringlacton, 6-gliedrigen Ringlacton, 7-gliedriges Ringlacton und/oder höhergliedriges Ringlacton bevorzugt ein 4-gliedriges Ringlacton ist.

In einer dritten Ausführungsform betrifft die Erfindung ein Verfahren gemäß der zweiten Ausführungsform, wobei das Lacton ein 4-gliedriges Ringlacton ist und das 4-gliedriges Ringlacton eine oder mehrere Verbindung(en) ist und ausgewählt wird aus der Gruppe bestehend aus Propiolacton, β-Butyrolacton, Diketen bevorzugt Propiolacton und β-Butyrolacton.

In einer vierten Ausführungsform betrifft die Erfindung ein Verfahren gemäß einer der ersten bis dritten Ausführungsform umfassend folgende Schritte:
i) Vorlegen der H-funktionellen Startersubstanz und optional des Katalysators unter Bildung einer Mischung i)
ii) Zugabe des Lactons zur Mischung i).

In einer fünften Ausführungsform betrifft die Erfindung ein Verfahren gemäß der vierten Ausführungsform, wobei das Lacton in Schritt ii) kontinuierlich oder stufenweise zur Mischung i) zugegeben wird.

In einer sechsten Ausführungsform betrifft die Erfindung ein Verfahren gemäß einer der ersten bis dritten Ausführungsform umfassend folgende Schritte:
(a) Vorlegen der H-funktionellen Startersubstanz, des Lactons und optional des Katalysators unter Bildung einer Mischung (a)
(b) Umsetzung der Mischung (a) zum Polyester.

In einer siebten Ausführungsform betrifft die Erfindung ein Verfahren gemäß einer der ersten bis sechsten Ausführungsform, wobei die H-funktionelle Startersubstanz mit einer oder mehreren freien Carboxygruppe(n) eine oder mehrere Verbindung(en) ist und ausgewählt wird aus der Gruppe bestehend aus einwertige Carbonsäuren, mehrwertige Carbonsäuren, Carboxygruppe(n) terminierte Polyester, Carboxygruppe(n) terminierte Polycarbonate, Carboxygruppe(n) terminierte Polyethercarbonate, Carboxygruppe(n) terminierte Polyetherestercarbonatpolyole und Carboxygruppe(n) terminierte Polyether.

In einer achten Ausführungsform betrifft die Erfindung ein Verfahren gemäß einer der ersten bis siebten Ausführungsform, wobei die die H-funktionelle Startersubstanz mit einer oder mehreren freien Carboxygruppe(n) eine oder mehrere Verbindung(en) ist und ausgewählt wird aus der Gruppe bestehend aus Methansäure, Ethansäure, Propansäure, Butansäure, Pentansäure, Hexansäure, Heptansäure, Octansäure, Decansäure, Dodecansäure, Tetradecansäure, Hexadecansäure, Octadecansäure, Milchsäure, Fluoressigsäure, Chloressigsäure, Bromessigsäure, Iodessigsäure, Difluoressigsäure, Trifluoressigsäure, Dichloressigsäure, Trichloressigsäure, Ölsäure, Salicylsäure, Benzoesäure, Oxalsäure, Malonsäure, Bernsteinsäure , Glutarsäure, Adipinsäure, Pimelinsäure, Korksäure, Azelainsäure, Sebacinsäure, Zitronensäure, Trimesinsäure, Fumarsäure, Maleinsäure, 1,10-Decandicarbonsäure, 1,12-Dodecandicarbonsäure, Phthalsäure, Isophthalsäure, Terephthalsäure, Pyromellitsäure und Trimellitsäure, Acrylsäure und Methacrylsäure.

In einer neunten Ausführungsform betrifft die Erfindung ein Verfahren gemäß einer der ersten bis achten Ausführungsform, wobei der Katalysator ein Doppelmetallcyanid (DMC) - Katalysator ist.

In einer zehnten Ausführungsform betrifft die Erfindung ein Verfahren gemäß der neunten Ausführungsform, wobei der Doppelmetallcyanid (DMC) - Katalysator einen organischen Komplexliganden umfasst, wobei der organische Komplexligand eine oder mehrere Verbindung(en) ist und ausgewählt wird aus der Gruppe bestehend aus tert-Butanol 2-Methyl-3-buten-2-ol, 2-Methyl-3-butin-2-ol, Ethylenglykol-mono-tert-butylether und 3-Methyl-3-oxetan-methanol.

In einer elften Ausführungsform betrifft die Erfindung ein Verfahren gemäß einer der ersten bis zehnten Ausführungsform, wobei das Verfahren ohne Zusatz eines Lösungsmittels durchgeführt wird.

In einer zwölften Ausführungsform betrifft die Erfindung ein Verfahren gemäß einer der ersten bis elften Ausführungsform, wobei das molare Verhältnis des Lactons zur H-funktionellen Startersubstanz von 1 zu 1 bis 30 zu 1, bevorzugt von 1 zu 1 bis 20 zu 1 beträgt.

In dreizehnten Ausführungsform betrifft die Erfindung ein Polyester erhältlich nach mindestens einem der ersten bis zwölften Ausführungsform.

In einer vierzehnten Ausführungsform betrifft die Erfindung einen Polyester gemäß einem der dreizehnten Ausführungsform, wobei der Polyester einen Polydisperistätsindex von ≤1.15, bevorzugt ≤1.10 aufweist, wobei der Polydisperistätsindex mittels der in der Beschreibung offenbarten Gel-Permeations-Chromatographie bestimmt wurde.

In einer fünfzehnten Ausführungsform betrifft die Beschichtungszusammensetzungen oder Klebstoffzusammensetzungen enthaltend Polyester gemäß der dreizehnten oder vierzehnten Ausführungsform.

In einer sechzehnten Ausführungsform betrifft die Erfindung ein Verfahren gemäß einer der ersten bis dritten und siebten bis zwölften Ausführungsform umfassend folgende Schritte:
i) Vorlegen des Katalysators
ii) Zugabe des Lactons und der H-funktionellen Startersubstanz zu dem Katalysator.

In einer siebzehnten Ausführungsform betrifft die Erfindung ein Verfahren gemäß der sechzehnten Ausfürhungsform, wobei das Lacton und die H-funktionelle Startersubstanz vorvermischt werden oder das Lacton und die H-funktionelle Startersubstanz werden durch separate Zuführungen in den Reaktor gegeben.

In einer achtzehnten Ausführungsform betrifft die Erfindung ein Verfahren gemäß einer der ersten bis dritten und siebten bis zwölften Ausführungsform, wobei die H-funktionelle Startersubstanz, das Lacton und der Katalysator kontinuierlich vermischt und zum Polyester Produkt umgesetzt werden und das das Polyester Produkt kontinuierlich abgeführt wird.

### Beispiele

Die vorliegende Erfindung wird anhand der nachfolgenden Beispiele näher erläutert, ohne jedoch darauf beschränkt zu sein.

### Verwendete Ausgangsstoffe

### cyclische Lactone

β-Propiolacton (bPL, Reinheit 98,5 %, Ferak Berlin GmbH)
β -Butyrolacton (bBL, Reinheit 98 %, Sigma-Aldrich Chemie GmbH)

### H-funktionelle Startersubstanz

1,8-Oktandiol (98 %, Sigma Aldrich)
Adipinsäure (Sigma-Aldrich, BioXtra, 99,5% (HPLC))
Zitronensäure (wasserfrei, Sigma Aldrich, 99,5%)
Terephthalsäure (Sigma Aldrich, 98%)

### Katalysatoren

In allen Beispielen wurde ein DMC-Katalysator verwendet wurde, der gemäß Beispiel 6 in WO 01/80994 A1 hergestellt wurde.

### Lösungsmittel

Toluol (>99,5%, Azelis Deutschland GmbH)
THF (Fisher Scientific, GPC Grade)

### Beschreibung der Methoden:

Gel-Permeations-Chromatographie (GPC): Die Messungen erfolgten auf einem Agilent 1200 Series (G1311A Bin Pump, G1313A ALS, G1362A RID), Detektion über RID; Elutionsmittel: Tetrahydrofuran (GPC grade), Flussrate 1.0 mL/min bei 40°C Säulentemperatur; Säulenkombination: 2 x PSS SDV Vorsäule 100 Å (5 µm), 2x PSS SDV 1000 Å (5 µm). Zur Kalibrierung wurde das ReadyCal-Kit Poly(styrene) low im Bereich Mp = 266 - 66000 Da von "PSS Polymer Standards Service" verwendet. Als Messaufnahme- und Auswertungssoftware wurde das Programmpaket "PSS WinGPC Unity" verwendet. Der Polydispersitätsindex aus gewichtetem (Mw) und Zahlenmittlerem (Mn) Molekulargewicht der Gel-Permeations-Chromatographie ist definiert als Mw/Mn.

### ¹H-NMR

Der Umsatz des Monomers wurde mittels ¹H-NMR (Firma Bruker, DPX 400, 400 MHz; Pulsprogramm zg30, Wartezeit D1: 10s, 64 Scans) bestimmt. Die Probe wurde jeweils in deuteriertem Chloroform gelöst. Die relevanten Resonanzen im ¹H-NMR (bezogen auf TMS = 0 ppm) und die Zuordnung der Flächenintegrale (A) ergeben sich wie folgt:
- Poly(hydroxybutyrat) (= Polybutyrolacton) mit Resonanz bei 5,25 (1H), 2,61 (1H), 2,48 (1H) und 1,28 (3H).
- β-Butyrolacton mit Resonanz bei 4,70 (1H), 3,57 (1H), 3,07 (1H) und 1,57 (3H).
- Poly(hydroxypropionat) (= Polypropiolacton) mit Resonanz bei 4,38 (2H) und 2,66 (2H)
- β-Propiolacton mit Resonanz bei 4,28 (2H) und 3,54 (2H)

Der Umsatz wird bestimmt als Integral eines geeigneten Polymersignals geteilt durch die Summe eines geeigneten Polymersignal und Monomersignals. Alle Signale werden auf 1H referenziert.

### Beispiel 1: Herstellung eines Polyesters aus β-Butyrolacton mittels DMC-Katalyse und Carbonsäure-funktionalisiertem Starter (Adipinsäure)

In einen 300 mL Stahlreaktor werden Toluol (50,0 g), DMC Katalysator (1500 ppm bezogen auf die Gesamtmasse von Starter und β-Lacton) und Adipinsäure (2,92 g, 20,0 mmol, 1,00 Äq.) vorgelegt. Der Reaktor wird mit N₂ gespült. Bei 130 °C wird anschließend β-Butyrolacton (17,1 g, 198 mmol, 9,90 Äq.) kontinuierlich über 120 min in den Reaktor gefördert. Es wird 120 min bei 130 °C nachgerührt. Flüchtige Komponenten werden anschließend im Vakuum entfernt. Eine Analyse des Molekulargewichts erfolgt mittels Gel-Permeations-Chromatographie (GPC) in THF. Der Umsatz wird mittels ¹H NMR Analyse bestimmt.

### Vergleichsbeispiel 1: Herstellung eines Polyesters aus β-Butyrolacton mittels DMC-Katalyse und Hydroxy-funktionalisiertem Starter (1,8-Oktandiol)

Die Polymerisation erfolgt analog zu Beispiel 1. Als Starter wird Adipinsäure durch 1,8-Oktandiol in identischen Massen- und Stoffmengenanteilen ersetzt.

### Beispiel 2: Herstellung eines Polyesters aus β-Butyrolacton mittels DMC-Katalyse und Carbonsäure-funktionalisiertem Starter (Adipinsäure)

In einen 300 mL Stahlreaktor werden Toluol (50,0 g), DMC Katalysator (2000 ppm bezogen auf die Gesamtmasse von Starter und β-Lacton) und Adipinsäure (5,84 g, 40,0 mmol, 1,00 Äq.) vorgelegt. Der Reaktor wird mit N₂ gespült. Bei 130 °C wird anschließend β-Butyrolacton (14,1 g, 164 mmol, 4,10 Äq.) kontinuierlich über 120 min in den Reaktor gefördert. Es wird 120 min bei 130 °C nachgerührt. Flüchtige Komponenten werden anschließend im Vakuum entfernt. Eine Analyse des Molekulargewichts erfolgt mittels Gel-Permeations-Chromatographie (GPC) in THF. Der Umsatz wird mittels ¹H NMR Analyse bestimmt.

### Vergleichsbeispiel 2: Herstellung eines Polyesters aus β-Butyrolacton mittels DMC-Katalyse und Hydroxy-funktionalisiertem Starter (1,8-Oktandiol)

Die Polymerisation erfolgt analog zu Beispiel 3. Als Starter wird Adipinsäure durch 1,8-Oktandiol in identischen Massen- und Stoffmengenanteilen ersetzt.

### Beispiel 3: Herstellung eines Polyesters aus β-Propiolacton mittels DMC-Katalyse und Carbonsäure-funktionalisiertem Starter (Adipinsäure)

In einen 300 mL Stahlreaktor werden THF (50,0 g), DMC Katalysator (3000 ppm bezogen auf die Gesamtmasse von Starter und β-Lacton) und Adipinsäure (2,92 g, 20,0 mmol, 1,00 Äq.) vorgelegt. Der Reaktor wird mit N₂ gespült. Bei 130 °C wird anschließend β-Propiolacton (17,1 g, 237 mmol, 11,9 Äq.) kontinuierlich über 120 min in den Reaktor gefördert. Es wird 120 min bei 130 °C nachgerührt. Flüchtige Komponenten werden anschließend im Vakuum entfernt. Eine Analyse des Molekulargewichts erfolgt mittels Gel-Permeations-Chromatographie (GPC) in THF. Der Umsatz wird mittels ¹H NMR Analyse bestimmt.

### Vergleichsbeispiel 3: Herstellung eines Polyesters aus β-Propiolacton mittels DMC-Katalyse und Hydroxy-funktionalisiertem Starter (1,8-Oktandiol)

Die Polymerisation erfolgt analog zu Beispiel 1. Als Starter wird Adipinsäure durch 1,8-Oktandiol in identischen Massen- und Stoffmengenanteilen ersetzt.

### Beispiel 4: Herstellung eines Polyesters aus β-Propiolacton mittels DMC-Katalyse und Carbonsäure-funktionalisiertem Starter (Adipinsäure)

In einen 300 mL Stahlreaktor werden THF (50,0 g), DMC Katalysator (3000 ppm bezogen auf die Gesamtmasse von Starter und β-Lacton) und Adipinsäure (5,84 g, 40,0 mmol, 1,00 Äq.) vorgelegt. Der Reaktor wird mit N₂ gespült. Bei 130 °C wird anschließend β-Propiolacton (14,1 g, 196 mmol, 4,90 Äq.) kontinuierlich über 120 min in den Reaktor gefördert. Es wird 120 min bei 130 °C nachgerührt. Flüchtige Komponenten werden anschließend im Vakuum entfernt. Eine Analyse des Molekulargewichts erfolgt mittels Gel-Permeations-Chromatographie (GPC) in THF. Der Umsatz wird mittels ¹H NMR Analyse bestimmt.

### Vergleichsbeispiel 4: Herstellung eines Polyesters aus β-Propiolacton mittels DMC-Katalyse und Hydroxy-funktionalisiertem Starter (1,8-Oktandiol)

Die Polymerisation erfolgt analog zu Beispiel 3. Als Starter wird Adipinsäure durch 1,8-Oktandiol in identischen Massen- und Stoffmengenanteilen ersetzt.

### Beispiel 5: Lösemittelfreie Herstellung eines Polyesters aus β-Propiolacton mittels DMC-Katalyse und Carbonsäure-funktionalisiertem Starter im Batchverfahren (Adipinsäure)

In einen 300 mL Stahlreaktor werden DMC Katalysator (3000 ppm bezogen auf die Gesamtmasse von Starter und β-Lacton), Adipinsäure (14,6 g, 99,9 mmol, 1,00 Äq.) und β-Propiolacton (35,4 g, 491 mmol, 4,91 Äq.) vorgelegt. Der Reaktor wird mit N₂ gespült. Es wird 240 min bei 130 °C nachgerührt. Flüchtige Komponenten werden anschließend im Vakuum entfernt. Eine Analyse des Molekulargewichts erfolgt mittels Gel-Permeations-Chromatographie (GPC) in THF. Der Umsatz wird mittels ¹H NMR Analyse bestimmt.

### Beispiel 6: Herstellung eines Polyesters aus β-Propiolacton mittels DMC-Katalyse und Carbonsäure-funktionalisiertem Starter (Zitronensäure)

In einen 300 mL Stahlreaktor werden THF (50,0 g), DMC Katalysator (3000 ppm bezogen auf die Gesamtmasse von Starter und β-Lacton) und Zitronensäure (3,84 g, 20,0 mmol, 1,00 Äq.) vorgelegt. Der Reaktor wird mit N₂ gespült. Bei 130 °C wird anschließend β-Propiolacton (16,2 g, 224 mmol, 11,2 Äq.) kontinuierlich über 120 min in den Reaktor gefördert. Es wird 120 min bei 130 °C nachgerührt. Flüchtige Komponenten werden anschließend im Vakuum entfernt. Eine Analyse des Molekulargewichts erfolgt mittels Gel-Permeations-Chromatographie (GPC) in THF. Der Umsatz wird mittels ¹H NMR Analyse bestimmt.

### Beispiel 7: Herstellung eines Polyesters aus β-Propiolacton mittels DMC-Katalyse und Carbonsäure-funktionalisiertem Starter (Terephthalsäure)

In einen 300 mL Stahlreaktor werden THF (50,0 g), DMC Katalysator (3000 ppm bezogen auf die Gesamtmasse von Starter und β-Lacton) und Terephthalsäure (3,32 g, 20,0 mmol, 1,00 Äq.) vorgelegt. Der Reaktor wird mit N₂ gespült. Bei 130 °C wird anschließend β-Propiolacton (16,7 g, 231 mmol, 11,6 Äq.) kontinuierlich über 120 min in den Reaktor gefördert. Es wird 120 min bei 130 °C nachgerührt. Flüchtige Komponenten werden anschließend im Vakuum entfernt. Eine Analyse des Molekulargewichts erfolgt mittels Gel-Permeations-Chromatographie (GPC) in THF. Der Umsatz wird mittels ¹H NMR Analyse bestimmt.

**Tabelle 1: Herstellung von Polyestern aus β-Lactonen mittels DMC-Katalyse.**

| Nr. | Lacton | H-fkt. Startersubstanz | Katalysator | x(Kat) [ppm] | m(bPL)/m (Starter) | LM | Mₙ [g/mol] | PDI | X(Lacton) [%] |
|---|---|---|---|---|---|---|---|---|---|
| Bsp. 1 | bBL | Adipinsäure | DMC | 1500 | 5.84 | Toluol | 970 | 1,02 | 93 |
| Vgl-Bsp. 1 | bBL | 1,8-Oktandiol | DMC | 1500 | 5,84 | Toluol | 1,8-Oktandiol, 2300, 4500^{a)} | multimodal | 100 |
| Bsp. 2 | bBL | Adipinsäure | DMC | 2000 | 2,42 | Toluol | 610 | 1,03 | 93 |
| Vgl.-Bsp. 2 | bBL | 1,8-Oktandiol | DMC | 2000 | 2,42 | Toluol | 1,8-Oktandiol, 2000, 4500^{a)} | multimodal | 100 |
| Bsp. 3 | bPL | Adipinsäure | DMC | 3000 | 5,84 | THF | 1260 | 1,02 | 94 |
| Vgl.-Bsp. 3 | bPL | 1,8-Oktandiol | DMC | 3000 | 5,84 | THF | 1,8-Oktandiol, 2300, 3700^{a)} | multimodal | 91 |
| Bsp. 4 | bPL | Adipinsäure | DMC | 3000 | 2,42 | THF | 790 | 1,06 | 90 |
| Vgl.-Bsp. 4 | bPL | 1,8-Oktandiol | DMC | 3000 | 2,42 | THF | 1,8-Oktandiol, 1900,4000^{a)} | multimodal | 96 |
| Bsp. 5 | bPL | Adipinsäure | DMC | 3000 | 2,42 | - | 580 | 1,08 | 99 |
| Bsp. 6 | bPL | Zitronensäure | DMC | 3000 | 3,76 | THF | 1260 | 1,07 | 95 |
| Bsp. 7 | bPL | Terephthalsäure | DMC | 3000 | 5,03 | THF | 1290 | 1,06 | 95 |

| | | | | | | | | | |
|---|---|---|---|---|---|---|---|---|---|
| ^{a)} Es wird eine multimodale Molekulargewichtsverteilung beobachtet. Hierbei wurde nicht umgesetzter Starter identifiziert. Außerdem sind die Peak-Maxima der beobachteten Polyestersignale angegeben. | | | | | | | | | |

## Patentansprüche

1. Verfahren zur Herstellung eines Polyesters durch Umsetzung einer H-funktionellen Startersubstanz mit einem Lacton in Gegenwart eines Katalysators;
wobei die H-funktionelle Verbindung eine oder mehrere freie Carboxygruppe(n) aufweist; und wobei der Katalysator eine Brönsted-Säure oder ein Doppelmetallcyanid (DMC)-Katalysator ist.

2. Verfahren gemäß Anspruch 1, wobei das Lacton ein 4-gliedriges Ringlacton, 5-gliedriges Ringlacton, 6-gliedrigen Ringlacton, 7-gliedriges Ringlacton und/oder höhergliedriges Ringlacton bevorzugt ein 4-gliedriges Ringlacton ist.

3. Verfahren gemäß Anspruch 2, wobei das Lacton ein 4-gliedriges Ringlacton ist und das 4-gliedriges Ringlacton eine oder mehrere Verbindung(en) ist und ausgewählt wird aus der Gruppe bestehend aus Propiolacton, β-Butyrolacton, Diketen bevorzugt Propiolacton und β-Butyrolacton.

4. Verfahren gemäß einem der Ansprüche 1 bis 3 umfassend folgende Schritte:
i) Vorlegen der H-funktionellen Startersubstanz und optional des Katalysators unter Bildung einer Mischung i)
ii) Zugabe des Lactons zur Mischung i)

5. Verfahren gemäß Anspruch 4, wobei das Lacton in Schritt ii) kontinuierlich oder stufenweise zur Mischung i) zugegeben wird.

6. Verfahren gemäß einem der Ansprüche 1 bis 3 umfassend folgende Schritte:
(a) Vorlegen der H-funktionellen Startersubstanz, des Lactons und optional des Katalysators unter Bildung einer Mischung (a)
(b) Umsetzung der Mischung (a) zum Polyester.

7. Verfahren gemäß einem der Ansprüche 1 bis 6, wobei die H-funktionelle Startersubstanz mit einer oder mehreren freien Carboxygruppe(n) eine oder mehrere Verbindung(en) ist und ausgewählt wird aus der Gruppe bestehend aus einwertige Carbonsäuren, mehrwertige Carbonsäuren, Carboxygruppe(n) terminierte Polyester, Carboxygruppe(n) terminierte Polycarbonate, Carboxygruppe(n) terminierte Polyethercarbonate, Carboxygruppe(n) terminierte Polyetherestercarbonatpolyole und Carboxygruppe(n) terminierte Polyether.

8. Verfahren gemäß einem der Ansprüche 1 bis 7, wobei die die H-funktionelle Startersubstanz mit einer oder mehreren freien Carboxygruppe(n) eine oder mehrere Verbindung(en) ist und ausgewählt wird aus der Gruppe bestehend aus Methansäure, Ethansäure, Propansäure, Butansäure, Pentansäure, Hexansäure, Heptansäure, Octansäure, Decansäure, Dodecansäure, Tetradecansäure, Hexadecansäure, Octadecansäure, Milchsäure, Fluoressigsäure, Chloressigsäure, Bromessigsäure, Iodessigsäure, Difluoressigsäure, Trifluoressigsäure, Dichloressigsäure, Trichloressigsäure, Ölsäure, Salicylsäure, Benzoesäure, Oxalsäure, Malonsäure, Bernsteinsäure, Glutarsäure, Adipinsäure, Pimelinsäure, Korksäure, Azelainsäure, Sebacinsäure, Zitronensäure, Trimesinsäure, Fumarsäure, Maleinsäure, 1,10-Decandicarbonsäure, 1,12-Dodecandicarbonsäure, Phthalsäure, Isophthalsäure, Terephthalsäure, Pyromellitsäure und Trimellitsäure, Acrylsäure und Methacrylsäure.

9. Verfahren gemäß einem der Ansprüche 1 bis 8, wobei der Katalysator ein Doppelmetallcyanid (DMC) - Katalysator ist.

10. Verfahren gemäß Anspruch 9, wobei der Doppelmetallcyanid (DMC) - Katalysator einen organischen Komplexliganden umfasst, wobei der organische Komplexligand eine oder mehrere Verbindung(en) ist und ausgewählt wird aus der Gruppe bestehend aus tert-Butanol 2-Methyl-3-buten-2-ol, 2-Methyl-3-butin-2-ol, Ethylenglykol-mono-tert-butylether und 3-Methyl-3-oxetan-methanol.

11. Verfahren gemäß einem der Ansprüche 1 bis 10, wobei das Verfahren ohne Zusatz eines Lösungsmittels durchgeführt wird.

12. Verfahren gemäß einem der Ansprüche 1 bis 11, wobei das molare Verhältnis des Lactons zur H-funktionellen Startersubstanz von 1 zu 1 bis 30 zu 1, bevorzugt von 1 zu 1 bis 20 zu 1 beträgt.

13. Polyester erhältlich nach mindestens einem der Ansprüche 1 bis 12.

14. Polyester gemäß Anspruch 13, wobei der Polyester einen Polydisperistätsindex von ≤1.15, bevorzugt ≤1.10 aufweist, wobei der Polydisperistätsindex mittels der in der Beschreibung offenbarten Gel-Permeations-Chromatographie bestimmt wurde.

15. Beschichtungszusammensetzungen oder Klebstoffzusammensetzungen enthaltend Polyester gemäß Anspruch 13 oder 14.
